# EUROPEAN PATENT SPECIFICATION

(11) **EP 1 276 678 B1**
(45) Date of publication and mention of the grant of the patent: **08.09.2004**
(21) Application number: 01933872.2
(22) Date of filing: 23.04.2001
(51) Int. Cl.: B65D 77/06

(54) **PROCESS FOR REFILLING A RECEPTACLE WITH A COLLAPSIBLE INNER CONTAINER**
VERFAHREN ZUM NACHFÜLLEN EINES BEHÄLTERS MIT ZUSAMMENFALTBAREM INNENBEUTEL
PROCEDE POUR REMPLIR UN RECEPTACLE COMPRENANT UN RECIPIENT INTERNE PLIABLE

(30) Priority: 25.04.2000 EP 00303414
(43) Date of publication of application: 22.01.2003
(73) Proprietor: SHELL INTERNATIONALE RESEARCH MAATSCHAPPIJ B.V., 2596 HR Den Haag (NL)
(72) Inventor: HEWLITT, Timothy, London W11 2AR (GB); KELSEY, Steven, London W11 2AR (GB); MASKELL, William, London W11 2AR (GB); O'BRIEN, Jerard, London W11 2AR (GB)
(86) International application number: PCT/EP2001/004590
(87) International publication number: WO 2001/081196

(56) References cited:
- EP-A- 0 358 053
- EP-A- 0 501 015
- EP-A- 0 528 394
- US-A- 3 167 210
- US-A- 4 330 066
- US-A- 5 516 007

## Description

### Field of the Invention

The present invention relates to an outer rigid or semi-rigid container at least partially housing an at least partially collapsible inner container.

### Background of the Invention

Containers for the purchase, transportation and dispensing of products are well known in the art and are in widespread use.

Such containers are available in a wide variety of shapes and forms. They may be assembled from a wide variety of components, and may be manufactured from a wide variety of materials.

Containers may generally be divided into two distinct classes.

The first class is non-reusable containers, that is to say, where the container is employed as a single use component and is disposed of when emptied of its contents.

The second class is reusable containers, that is to say, where the container is returned to the point of sale or dispense to be refilled once emptied of its contents. This process may be repeated many times, and the container may be refilled with contents different to those previously in the container.

It is usual with reusable containers that the entire container including all its components is returned to the point of sale or dispense for refill.

That is to say, the user or a third party has to transport the empty container in its entirety back to the point of sale or dispense for refilling.

Typically, a reusable container is designed to contain, transport and dispense a product according to the product properties and intended use.

A reusable container typically has features that enable the container to survive the process of return and reuse.

Typically, reusable containers are designed with the minimal use of materials and components in order to provide a minimal cost.

An alternative method is the use of two different container types designed to enable refilling at the point of use.

The first container is designed to optimise the performance of the container in use in its usual environment, for example, a home or a place of work.

The second container is designed to provide a safe and secure means of supplying the first container with a means of refilling.

The nature of the second container is optimised for transportation and product protection. Such a container is non-reusable.

The second container is typically designed to use the least amount of material, for example, a sachet or carton, and to use the least number of components available within the state of the art, in order to constrain cost.

Although this method has some advantages in that it is easy to implement within the constraints of the current distribution and retail system, the use of non-reusable refill packs is less environmentally friendly and also makes the inherent cost of this method higher than the refill method described above.

This additional cost constrains the resources available to allow the first container to be fully optimised for its role at the point of use.

Product is supplied as a concentrate in many cases, in order to reduce the amount of material required for the second container. This concentrate is then manually reconstituted in the first container by the user at the point of use. Such a method may limit the product homogenisation, and may adversely affect product quality and performance.

Containers of the nature described above have a number of inherent problems.

Any container that is designed to be discarded after one use is inherently expensive in resource and commercial terms compared to a container which is capable of being reused.

A reusable container retains the original shape, size and proportions of the filled pack when empty, requiring the user or a third party to transport a relatively bulky item. This discourages many users from adopting such a system.

A reusable container cannot be fully optimised for the dispensing or dosing of product or its handling by the user at the point of use as its design is constrained by the need to meet the requirements of the return and refill cycle. Typically a compromise between the conflicting requirements is achieved.

The design of refill containers to enable refilling to take place at the point of use is constrained by the need to control the cost penalty inherent in the method and typically results in minimal designs that do not optimise the ease of use necessary for such a system.

### SUMMARY OF THE INVENTION

According to another aspect of the present invention there is provided a process for the refilling, transport and storage of products, wherein
a) a reusable at least partially collapsible inner container is removed from a rigid or semi-rigid outer container which inner container either has not previously contained any product or has been at least partially emptied of product;
b) said reusable at least partially collapsible inner container is transported to a point of sale or dispense;
c) said reusable at least partially collapsible inner container is filled or refilled with product;
d) said reusable at least partially collapsible inner container is transported to a point of use; and
e) said reusable at least partially collapsible inner container is housed in a rigid or semi-rigid outer container for subsequent use.

Preferably, said inner container has a sealable outlet therein.

Preferably, the outlet of the inner container is not wholly surrounded by the opening of the outer container.

In a preferred embodiment of the process of the present invention in step b), said reusable at least partially collapsible inner container may be transported to the point of sale or dispense in an at least partially collapsed condition.

By "collapsible" in the present invention, is meant any action that results in a reduction in size and volume of the reusable collapsible inner container.

It will be appreciated that in the context of the present invention by "reusable" is meant an inner container that may be removed and subsequently refitted into the outer container in the same way that it was originally housed, that is to say, such that the inner container may be refitted into the outer container in an at least partially filled state, and that upon refitting said inner container is still capable of being used for its original purpose.

The rigid or semi-rigid outer container improves the handling of the reusable collapsible inner container when at the point of use.

The rigid or semi-rigid outer container can be made in any material and in any shape or configuration, providing that it can house the reusable collapsible inner container. Suitable materials include plastics materials such as for example PET, PP, PE, HDPE, PVC and barrier laminates such as PET/NYLON/PET and PP/BAREX/PP, wood, metals such as aluminium and iron, metal alloys, ceramics and glass. (BAREX is a trade mark of BP Amoco plc).

The design of the rigid or semi-rigid outer container may include any dispensing, dosing or application feature or device providing the means to dispense the product in a wide variety of ways.

The design of the rigid or semi-rigid outer container may include provision for multiple dispense points and manual or powered dispensing.

The design of the rigid or semi-rigid outer container may include provision for ease of handling in use, such as and by way of example only, handles integral to the container design or as an additional component or components; flexible members or components such as straps, webbing, collars; additional grip points around the neck or base to allow the user access to multiple handling points; methods such as straps or clips, whereby the container may be "worn" by the user or hung from convenient location points to enable the container to be used on the move or in locations where there are no appropriate surfaces for storage.

The design of the rigid or semi-rigid outer container may be of any scale or size that is relevant to the product or the product use.

The reusable at least partially collapsible inner container may be made from any material, and in any shape or configuration, providing it can be housed within the rigid or semi-rigid outer container.

The reusable at least partially collapsible inner container may be manufactured by employing any technique commonly used in the art.

In one embodiment of the present invention, said reusable at least partially collapsible inner container is manufactured from a plastics material. As such, said reusable at least partially collapsible inner container may be manufactured by any conventional process for the forming of plastics materials.

Suitable plastics include any appropriate to the requirements of the product including, by way of example, PET, PP, PE, HDPE, PVC, and barrier laminates such as PET/NYLON/PET and PP/BAREX/PP.

In a preferred embodiment of the present invention, said reusable at least partially collapsible inner container may be manufactured by an extrusion or injection blow-moulding process.

The reusable at least partially collapsible inner container generally has a bottom wall, peripheral collapsible side walls, and an upper portion comprising one or more dispensing points. The terms "bottom", "side" and "upper" are used to identify those positions of the container when it is in its normal orientation in use.

It will be appreciated by one skilled in the art, that for convenience said bottom wall and/or upper portion may also be of a collapsible nature.

The upper portion may be an integral part of the reusable at least partially collapsible inner container, or it may be securely sealed to the peripheral collapsible side walls of the at least partially collapsible inner container by any technique commonly used in the art. Suitable techniques include heat sealing, ultrasonic sealing and the use of adhesives.

In a preferred embodiment, the upper portion may contain a positioning guide to aid filling at the point of sale or dispense. Examples of suitable positioning guides include grooves and shoulders.

The reusable at least partially collapsible inner container may include any device or mechanism for refilling providing that it achieves intended and accurate filling of the container.

The structure of the reusable inner container can be collapsed by any suitable means, including powered means through the action of a mechanism or motor and methods utilising a stored reservoir of energy such as, and by way of example, an elastic membrane or a spring or a battery, from an external or internal source.

The reusable at least partially collapsible inner container may be collapsed manually by the user or a third party.

It will be appreciated by one skilled in the art that the nature of said reusable at least partially collapsible inner container is not limited in the present invention.

The reusable at least partially collapsible inner container may be of any form commonly used in the art that allows a reduction in the size and volume of said container.

The reusable at least partially collapsible inner container may comprise pleated, fluted or folded peripheral side walls that improve the degree to which the container may be made to collapse by providing a controlled means of collapse.

For example, said side walls may comprise vertically spaced steps or shoulders, which facilitate axial collapse and subsequent concentric folding of one or more portions of the side wall to provide a collapsed inner container with at least two "layers" of side walls. Said side walls may be formed to give smooth, tapered or even straight peripheral side walls.

Alternative methods include those wherein the reusable collapsible inner container comprises peripheral collapsible side walls in the form of a longitudinal compressible helical thread.

In one embodiment, the reusable at least partially collapsible inner container may comprise a collapsible bag or sachet.

In a further embodiment, the reusable at least partially collapsible inner container may comprise an expandable elastomeric material. Said expandable elastomeric material will automatically distend upon filling, and will be impermeable to the product contained therein. In a preferred embodiment, said expandable elastomeric material will contract upon dispense of the product therein. Thus, it is possible to avoid the necessity for machine or manual collapse of the reusable collapsible intermediate container after use. The expandable elastomeric material may be housed in a flexibility limiting support to restrict the amount of distension possible, for example by using an outer netting bag.

It is within the skill of the person skilled in the art to select a suitable elastomeric material according to their precise requirements.

In a preferred embodiment, the reusable collapsible inner container comprises a rigid or semi-rigid upper portion. Said upper portion may conveniently comprise means for refilling and/or dispensing of product contained within said reusable collapsible inner container. Said upper portion may conveniently comprise means for transport of the reusable collapsible inner container, of any nature commonly used in the art, for example a handle or strap.

In a preferred embodiment of the present invention, the reusable collapsible inner container may comprise one or more fill apertures and one or more dispense apertures, said fill apertures being remotely positioned on the container in relation to the dispense apertures.

By "remote" in the present invention is meant at a location independent of the dispense aperture.

It will be appreciated that within the scope of the present invention, "remote" is also intended to encompass a situation wherein the fill aperture is located in the closure of the dispense aperture, i.e. whilst the fill aperture shares a common path to the interior of the container, the dispense aperture cannot be considered identical to that of the fill aperture.

The degree of reduction in size and volume of the reusable collapsible inner container in its collapsed condition is not limited in the present invention, however the reduction in volume is conveniently greater than 40 %, preferably greater than 60 %, and more preferably greater than 80 %, based on the volume of the reusable collapsible inner container in its non-collapsed condition.

The reusable at least partially collapsible inner container may comprise any number, combination and orientation of fill and/or dispense apertures that meet the needs of the product, its intended use or its method of use.

The reusable at least partially collapsible inner container may provide any means to communicate to the user the identity of the product it contains, and information about that product's state by means of, and by way of example, a transparent window, a gauge or a valve point for sampling.

The reusable at least partially collapsible inner container may be conveniently used for transporting liquids or solids from the point of sale or dispense to the point of use, whereupon said container is at least partially housed in a rigid or semi-rigid outer container of the kind described above.

The reusable collapsible inner container may provide any suitable means to at least partially house it securely within the rigid or semi-rigid outer container.

For example, the reusable at least partially collapsible inner container may be housed securely by virtue of a continuous flange or at least two individual connection points in the form of tabs, clips, fasteners and/or catches, present on the reusable at least partially collapsible inner container and/or the rigid or semi-rigid outer container.

The reusable at least partially collapsible inner container may be refilled at a dispense or vending point and carried by a flexible handle. The collapsible nature of said inner container improves its portability when empty.

The reusable at least partially collapsible inner container may made more portable by the action of closing the sealable means on said inner container in order to hold the at least partially collapsed inner container by a vacuum.

Outer and inner containers according to the present invention may be conveniently used to store and transport a wide variety of materials such as foodstuffs, beverages, household products such as detergents, and automotive products such as lubricants.

### BRIEF DESCRIPTION OF THE DRAWINGS

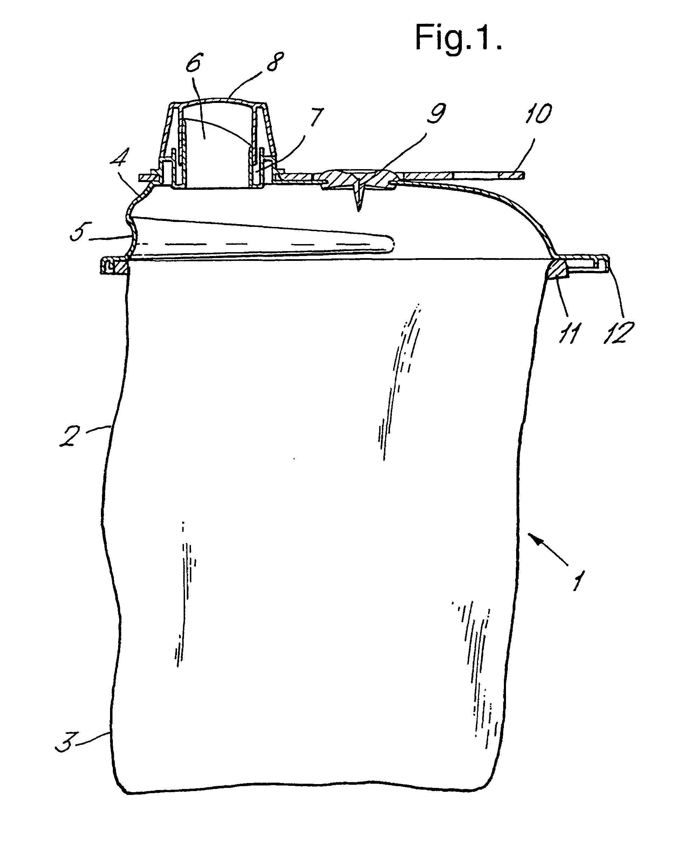

The present invention will now be described by way of example with reference to the accompanying drawings, in which:-
Figure 1 is a schematic cross-section through a reusable collapsible container in a non-collapsed condition;

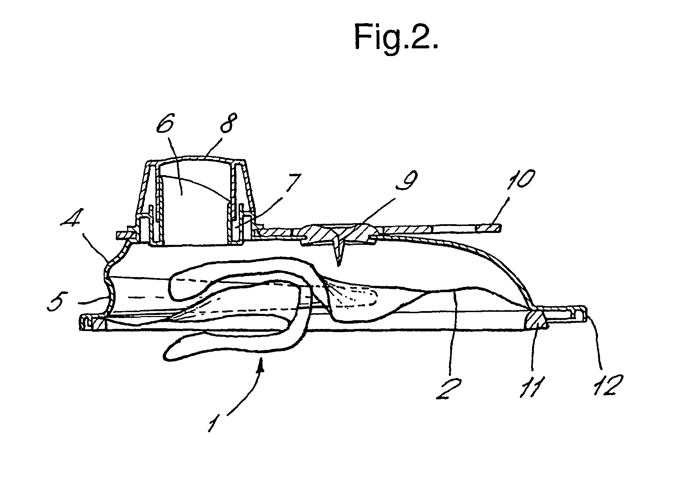

Figure 2 is a schematic cross-section through a reusable collapsible container in a collapsed condition;

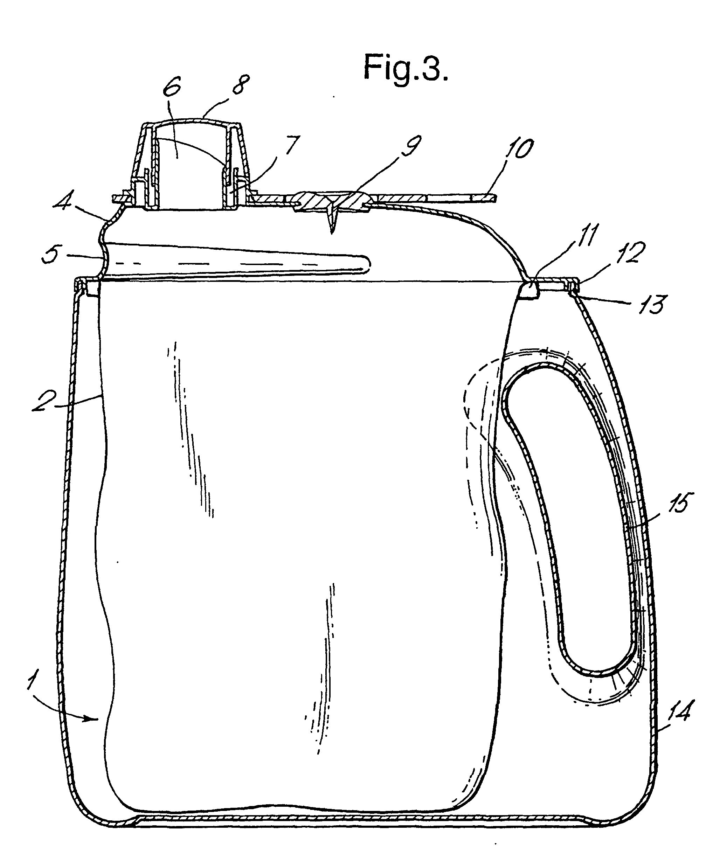

Figure 3 is a schematic cross-section through a rigid outer container housing a reusable collapsible inner container; and

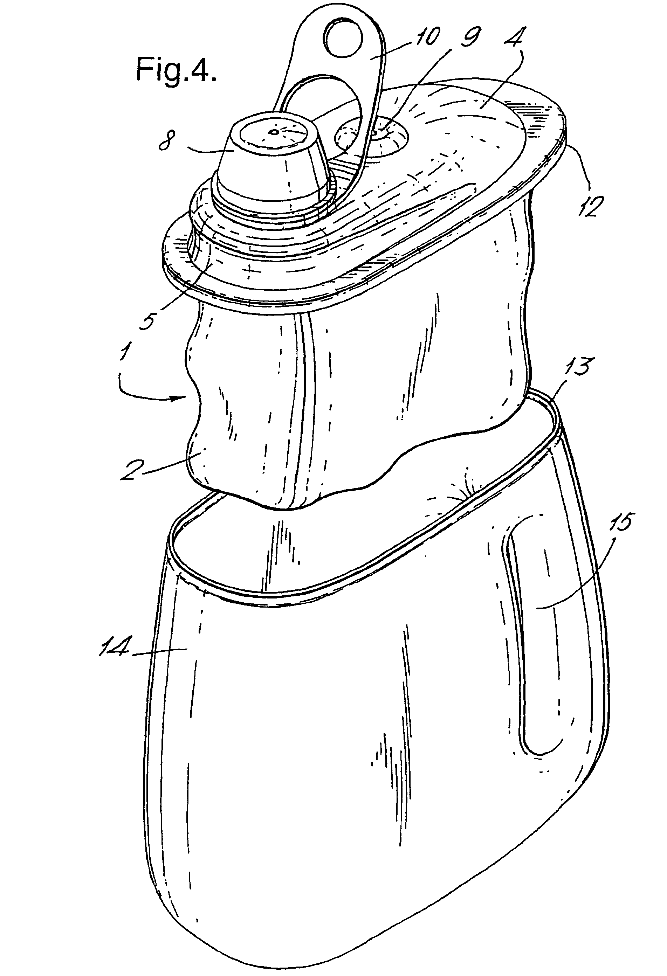

Figure 4 is a perspective view of a reusable collapsible container about to be housed in a rigid outer container.

### DETAILED DESCRIPTION OF THE INVENTION

A reusable collapsible inner container 1 comprises a collapsible bag 2 having side walls 3 attached to a rigid upper portion 4. Said upper portion comprises a positioning guide 5, which is so designed to cooperate with suitable means in a dispensing apparatus so as to ensure that it is correctly positioned in said apparatus whilst being filled with product at the point of dispense. Said upper portion 4 further comprises a sealable outlet in the form of a spout 6 with a drip-trap 7, and covered by a double-walled lid 8. Said lid cooperates with said spout 6 so as to ensure that there is no leakage of product from said inner container, and is removable so that product may be dispensed from said container at the point of use. Said upper portion 4 further comprises a remote fill aperture 9 in the form of a reed valve. The reusable collapsible inner container further comprises a flexible carrying handle 10. The upper portion 4 is attached to the collapsible bag 2 by suitable means such as an ultrasonic seal 11. The upper portion 4 further comprises means in the form of a latch 12 which is engageable with means in the form of an upper rim 13 of a rigid outer container 14, to enable secure attachment to said rigid outer container 14.

The collapsible bag 2 may be compressed, essentially by folding it at a number of locations, such that it is substantially accommodated by the upper portion 4. The collapsible bag 2 may be optionally held in a collapsed form by a vacuum upon replacement of lid 8.

The reusable collapsible inner container 1 is positioned in the outer container 14 by being moved vertically downward into the outer container 14 until the latch 12 engages to secure the upper portion 4 to an upper rim 13 of said outer container 14. The complete assembly of the inner container 1 and outer container 14 is then ready for use whereby product contained in said inner container 1 may be dispensed by opening said spout 6 by removing the lid 8 and grasping a handle 15.

## Claims

1. A process for the refilling, transport and storage of products, wherein
a) a reusable at least partially collapsible inner container (1) is removed from a rigid or semi-rigid outer container (14) which inner container (1) either has not previously contained any product or has been at least partially emptied of product;
b) said reusable at least partially collapsible inner container (1) is transported to a point of sale or dispense;
c) said reusable at least partially collapsible inner container (1) is filled or refilled with product;
d) said reusable at least partially collapsible inner container (1) is transported to a point of use; and
e) said reusable at least partially collapsible inner container (1) is housed in a rigid or semi-rigid outer container (14) for subsequent use.

2. A process according to Claim 1 wherein said inner container (1) has a sealable outlet (6) therein.

3. A process according to Claims 1 or 2, wherein the reusable at least partially collapsible inner container (1) comprises a collapsible bag or sachet (2).

4. A process according to any one of Claims 1 to 3 wherein the reusable at least partially collapsible inner container (1) comprises pleated, fluted or folded peripheral side walls (3).

5. A process according to any one of Claims 1 to 4 wherein the reusable at least partially collapsible inner container (1) comprises an expandable elastomeric material.

6. A process according to any one of Claims 1 to 5 wherein the reusable at least partially collapsible inner container (1) comprises a rigid or semi-rigid upper portion (4).

7. A process according to Claim 6 wherein the upper portion (4) is attached to peripheral collapsible side walls (3) of the reusable at least partially collapsible inner container (1) by heat sealing, ultrasonic sealing. or the use of adhesives.

8. A process according to any one of Claims 1 to 7 wherein the reusable at least partially collapsible inner container (1) is at least partially housed securely in the outer container (14) by means on the upper portion (4) of the reusable at least partially collapsible inner container (1) engageable with means (13) on the outer container (14).

9. A process according to any one of Claims 1 to 8 wherein the reusable at least partially collapsible inner container (1) comprises one or more fill apertures and one or more dispense apertures (9), said fill apertures being remotely positioned on the container in relation to the dispense aperture.

10. A process according to any one of Claims 1 to 9, for the refilling, transport and storage of foodstuffs, beverages, household products and automotive products.

## Patentansprüche

1. Verfahren zum Wiederbefüllen, Transportieren und Lagern von Produkten, bei welchem
a) ein wiederverwendbarer, zumindest teilweise zusammenlegbarer Innenbehälter (1) aus einem starren oder halbstarren Außenbehälter (14) entfernt wird, wobei der Innenbehälter (1) entweder vorher kein Produkt enthalten hat oder von dem Produkt zumindest teilweise entleert worden ist;
b) der wiederverwendbare, zumindest teilweise zusammenlegbare Innenbehälter (1) an eine Verkaufs- oder Abgabestelle transportiert wird;
c) der wiederverwendbare, zumindest teilweise zusammenlegbare Innenbehälter (1) mit dem Produkt gefüllt oder wiederbefüllt wird;
d) der wiederverwendbare, zumindest teilweise zusammenlegbare Innenbehälter (1) an eine Verwendungsstelle transportiert wird; und
e) der wiederverwendbare, zumindest teilweise zusammenlegbare Innenbehälter (1) in einem starren oder halbstarren Außenbehälter (14) zur nachfolgenden Verwendung aufgenommen wird.

2. Verfahren nach Anspruch 1, bei welchem der Innenbehälter (1) einen abdichtbaren Auslaß (6) aufweist.

3. Verfahren nach Anspruch 1 oder 2, bei welchem der wiederverwendbare, zumindest teilweise zusammenlegbare Innenbehälter (1) einen zusammenlegbaren Sack oder Beutel (2) aufweist.

4. Verfahren nach einem der Ansprüche 1 bis 3, bei welchem der wiederverwendbare, zumindest teilweise zusammenlegbare Innenbehälter (1) gefaltete, gewellte oder plissierte Umfangsseitenwände (3) aufweist.

5. Verfahren nach einem der Ansprüche 1 bis 4, bei welchem der wiederverwendbare, zumindest teilweise zusammenlegbare Innenbehälter (1) ein expandierbares Elastomermaterial aufweist.

6. Verfahren nach einem der Ansprüche 1 bis 5, bei welchem der wiederverwendbare, zumindest teilweise zusammenlegbare Innenbehälter (1) einen starren oder halbstarren Oberteil (4) aufweist.

7. Verfahren nach Anspruch 6, bei welchem der Oberteil (4) an zusammenlegbaren Umfangsseitenwänden (3) des wiederverwendbaren, zumindest teilweise zusammenlegbaren Innenbehälters (1) durch Hitzesiegelung, Ultraschallsiegelung oder die Verwendung von Klebstoffen befestigt ist.

8. Verfahren nach einem der Ansprüche 1 bis 7, bei welchem der wiederverwendbare, zumindest teilweise zusammenlegbare Innenbehälter (1) zumindest teilweise in dem Außenbehälter (14) mittels der an dem Oberteil (4) des wiederverwendbaren, zumindest teilweise zusammenlegbaren Innenbehälters (1) vorgesehenen Mittel sicher festlegbar ist, die mit Mitteln (13) am Außenbehälter (14) in Eingriff versetzbar sind.

9. Verfahren nach einem der Ansprüche 1 bis 8, bei welchem der wiederverwendbare, zumindest teilweise zusammenlegbare Innenbehälter (1) eine oder mehrere Füllöffnungen und eine oder mehrere Abgabeöffnungen (9) aufweist, wobei die Füllöffnungen an dem Behälter von der Abgabeöffnung entfernt angeordnet sind.

10. Verfahren nach einem der Ansprüche 1 bis 9 zum Wiederbefüllen, Transportieren und Lagern von Lebensmitteln, Getränken, Haushaltsprodukten und Automobilprodukten.

## Revendications

1. Procédé pour le remplissage, le transport et l'entreposage de produits, dans lequel
a) un récipient intérieur (1) réutilisable et au moins partiellement pliable est retiré d'un récipient extérieur rigide ou semi-rigide (14), lequel récipient intérieur (1) n'a contenu aucun produit précédemment ou a été au moins partiellement vidé de produit,
b) ledit récipient intérieur (1) réutilisable et au moins partiellement pliable est transporté jusqu'à un point de vente ou de distribution,
c) ledit récipient intérieur (1) réutilisable et au moins partiellement pliable est rempli ou de nouveau rempli d'un produit,
d) ledit récipient intérieur (1) réutilisable et au moins partiellement pliable est transporté jusqu'à un point d'utilisation et
e) ledit récipient intérieur (1) réutilisable et au moins partiellement pliable est logé dans un récipient extérieur rigide ou semi-rigide (14) en vue d'une utilisation ultérieure.

2. Procédé selon la revendication 1, dans lequel ledit récipient intérieur (1 ) contient un orifice de décharge (6) qui peut être fermé.

3. Procédé selon les revendications 1 ou 2, dans lequel le récipient intérieur réutilisable au moins partiellement pliable (1) comprend un sac ou un sachet pliable (2).

4. Procédé selon l'une quelconque des revendications 1 à 3, dans lequel le récipient intérieur (1) réutilisable et au moins partiellement pliable comprend des parois latérales périphériques (3) plissées, cannelées ou pliées.

5. Procédé selon l'une quelconque des revendications 1 à 4, dans lequel le récipient intérieur (1) réutilisable et au moins partiellement pliable comprend un matériau élastomère expansible.

6. Procédé selon l'une quelconque des revendications 1 à 5, dans lequel le récipient intérieur (1) réutilisable et au moins partiellement pliable comprend une partie supérieure rigide ou semi-rigide (4).

7. Procédé selon la revendication 6, dans lequel la partie supérieure (4) est fixée aux parois latérales périphériques pliables (3) du récipient intérieur (1) réutilisable et au moins partiellement pliable par thermosoudage, par soudage par ultrasons ou par recours à des adhésifs.

8. Procédé selon l'une quelconque des revendications 1 à 7, dans lequel le récipient intérieur (1) réutilisable et au moins partiellement pliable est au moins partiellement logé de manière sûre dans le récipient extérieur (14) au moyen de la partie supérieure (4) du récipient intérieur (1) réutilisable et au moins partiellement pliable, qui peut être engagée dans un moyen (13) prévu sur le récipient extérieur (14).

9. Procédé selon l'une quelconque des revendications 1 à 8, dans lequel le récipient intérieur (1) réutilisable et au moins partiellement pliable comprend une ou plusieurs ouvertures de remplissage et une ou plusieurs ouvertures de décharge (9), lesdites ouvertures de remplissage étant disposées sur le récipient à distance de l'ouverture de décharge.

10. Procédé selon l'une quelconque des revendications 1 à 9, pour le remplissage, le transport et l'entreposage de produits alimentaires, de boissons, de produits d'entretien et de produits destinés aux automobiles.
